Europäisches Patentamt

European Patent Office

Office européen des brevets

(11) Veröffentlichungsnummer : **0 436 821 B1**

(12) **EUROPÄISCHE PATENTSCHRIFT**

(45) Veröffentlichungstag der Patentschrift :
**31.05.95 Patentblatt 95/22**

(51) Int. Cl.$^6$ : **H02G 15/068**

(21) Anmeldenummer : **90122681.1**

(22) Anmeldetag : **27.11.90**

(54) **Verfahren zur Herstellung eines Feldsteuerungsbelages für Mittelspannungsgarnituren.**

(30) Priorität : **09.01.90 DE 4000455**

(43) Veröffentlichungstag der Anmeldung :
**17.07.91 Patentblatt 91/29**

(45) Bekanntmachung des Hinweises auf die
Patenterteilung :
**31.05.95 Patentblatt 95/22**

(84) Benannte Vertragsstaaten :
**AT BE CH DE ES FR GB GR IT LI NL SE**

(56) Entgegenhaltungen :
**FR-A- 2 287 793**
**FR-A- 2 307 351**
**FR-A- 2 547 451**
**US-A- 4 252 692**

(73) Patentinhaber : **RXS
Schrumpftechnik-Garnituren GmbH
Profilstrasse 4
D-58093 Hagen (DE)**

(72) Erfinder : **Binnewirtz, Jürgen Ralf, Dr.
Anrather Strasse 72
W-4150 Krefeld (DE)**

(74) Vertreter : **Fuchs, Franz-Josef, Dr.-Ing. et al
Postfach 22 13 17
D-80503 München (DE)**

## Beschreibung

Die Erfindung betrifft ein Verfahren zur Herstellung eines Feldsteuerungsbelages aus einem Polymermaterial und einem elektrisch leitfähigen Zusatz bei einem Endverschluß für Mitelspannungen.

Feldsteuernde Elemente für Kabelgarnituren sind in vielfältiger Weise bekannt. Dabei werden als Hauptwirkstoffe eine Vielzahl von Füllstoffen benutzt, die in Kombination mit einer geeigneten Polymermatrix und eventuell anderen Zusätzen das feldsteuernde Element bilden. Derartige Füllstoffe sind zum Beispiel anorganische Substanzen mit hoher Dielektrizitätskonstante wie Titan (IV) - verbindungen (Titandioxid, Bariumtitanat), elektrisch leitfähige Zusätze wie Siliciumcarbid, Ruß, Metallpulver sowie Metall- und Halbmetalloxide (Zinkoxid, Aluminiumoxid, Boroxid, Eisen (II, III) -oxid). So wird vielfach als Hauptwirkstoff ca. 70 % Eisen (II, III) -oxid verwendet, das in eine Polymermatrix aus Butylkautschuk eingebettet ist. Dieses Produkt wird als Innenbeschichtung in einem wärmeschrumpffähigen Schlauch aufgebracht. Eine solche Materialkombination zeigt jedoch Nachteile bei Langzeiteinsatz, besonders nach Auftreten hoher transienter Überspannungen. Danach wurden die Anforderungen vielfach nicht mehr eingehalten.

Aus der französischen Patentschrift FR-A-2 307 351 ist ein Feldsteuerungsbelag für Mittelspannungsgarnituren bekannt, der neben dem leitfähigen Zusatz auch ein polymeres Harz, z.B. "Nordel", enthält. Dieses Polymer ist unter Normalbedingungen, d.h. bei Raumtemperatur und Normaldruck, in festem Zustand, so daß bei der Herstellung für eine Mischung mit dem leitfähigen Zusatz und weiteren Materialien entsprechende Maßnahmen getroffen werden müssen, um einen ausreichenden Füllgrad erreichen zu können.

Zur elektrischen Feldsteuerung in Mittelspannungsgarnituren wird als feldsteuerndes Element eine Dichtmasse nach oben genannter Art vorgesehen, die als Innenbeschichtung in einen Schrumpfschlauch eingesetzt wird, wobei diese aufgrund ihrer Zusammensetzung in der Lage ist, eine unvorteilhafte Beanspruchung am Kabelende durch zu hohe Feldstärken zu vermeiden.

Dieser feldsteuernde Belag muß folgenden Anforderungen genügen:
- Zum Zwecke einer einfach durchzuführenden Beschichtung muß der Feldsteuerungsbelag als lösungsmittelhaltige Masse formuliert werden. Aus der Beschichtung im Schlauch bildet sich der feldsteuernde Belag durch Abdunsten des Lösungsmittels, das hierfür vorzugsweise einen niedrigen Siedepunkt bzw. eine hohe Verdunstungsrate aufweist.
- Der Feldsteuerungsbelag muß, zumindest bei der Schrumpftemperatur, eine genügend hohe Klebrigkeit besitzen oder entwickeln, um eine Haftung zur Kabeloberfläche zu gewährleisten. Die Aktivierungstemperatur des Belags soll bei 90 - 100° C liegen.
- Während des Schrumpfprozesses muß die Masse eine ausreichende Plastizität mit guten Fließeigenschaften aufweisen, so daß die Bildung von Blasen oder Hohlräumen verhindert und eine formschlüssige Verbindung mit der Substratoberfläche garantiert werden kann.
- Die Strom - Spannungscharakteristik soll nicht-linear sein mit einem steilen Anstieg der Kurve bei ca. 4 kV/ cm; Richtwerte:

| Spannung (kV) | Strom (µA) |
|---|---|
| 1 | 0,1 |
| 3-4 | 1-2 |
| 8 | bis 60 |

- Im besonderen muß der Feldsteuerungsbelag als Bestandteil einer Garnitur die nachstehend aufgeführten elektrischen Prüfungen nach DIN 57 278/ VDE 0278 bestehen (z.B. für ein 20 kV - System):
- Nennstehwechselspannungsprüfung
  (einminütige Stehspannung von 55 kV)
- Gleichspannungsprüfung
  (96 kV über 30 Minuten)
- Nennstehstoßspannungsprüfung
  (125 kV, beide Polaritäten je 10 Stöße)
- Dauerwechselspannungsprüfung bei zyklischer Strombelastung
  (126 Heizzyklen trocken)
- Teilentladungsmessung
  (teilentladungsfrei bei 24 kV ( $\leqq$ 1 pC)

- Langzeitprüfung
  (Lastwechsel bei 30 kV)

So ergibt sich für vorliegende Erfindung die Aufgabe, ein Verfahren zur Herstellung eines Feldsteuerungsbelages in Mittelspannungsgarnituren zu schaffen, durch das eine einfache Beschichtung auf der Innenseite möglich wird, wobei dadurch ein ausfallfreies Langzeitverhalten erreicht und durch günstige Rohstoffkombination die elektrischen Anforderungen wie auch das Erweichungsverhalten, das Fließvermögen, die Klebfähigkeit und die Löslichkeit verbessert werden soll. Die gestellte Aufgabe wird nun nach einem Verfahren gemäß der Erfindung dadurch gelöst, daß das Polymermaterial aus einem zähflüssigen, stark klebrigen Ethylenpropylendienterpolymer (EPDM) in einem leicht unpolaren Lösungsmittel gelöst wird, wobei das mittlere Molekulargewicht, $\overline{M}v$, des EPDM bis 15 000, vorzugsweise 6000 - 8000, beträgt, der Dienanteil zwischen 4,5 und 13 -Gewichts-% und das Ethylen-Propylen-Verhältnis im Ethylen-Propylen-Anteil zwischen 40/60 und 75/25 Gewichts-%, vorzugsweise zwischen 43/57 und 54/56 Gewichts-% liegt, daß als elektrisch leitfähiger Zusatz gekörntes Siliciumcarbid mit einer Korngröße von F 400 bis F 320 zugesetzt wird, wobei der Gewichtsanteil des Polymermaterials, ohne Lösungsmittel, 10 - 40 % und der des elektrisch leitenden Zusatzes entsprechend 60 - 90 % beträgt, daß diese Lösung zumindest bereichsweise auf der Innenfläche als Beschichtung eines vorzugsweise kriechstromfesten Schrumpfschlauches (1) aufgetragen wird und daß dann das Lösungsmittel aus der Beschichtung abdunstet.

Die Auswahl der Rohstoffe zur Entwicklung eines Feldsteuerungsbelages gemäß der Erfindung und die erfindungsgemäße Kombination mit einem wärmeschrumpfenden Element zur Bildung einer feldsteuernden Mittelspannungsgarnitur erfordert eine sorgfältige Abstimmung. Dabei steht gemäß der Aufgabe der Erfindung im Vordergrund, daß die Rezeptur einfach und mit wenigen Komponenten zusammenzustellen sein muß, um u.a. auch eine sichere Reproduzierbarkeit in der Fertigung gewährleisten zu können.

Als Hauptwirkstoff wird nun für den Feldsteuerungsbelag gemäß der Erfindung Siliciumcarbid verwendet, das keine magnetischen Eigenschaften besitzt und daher eine vergleichbar bessere Spannungsstabilität nach transienten Überspannungen aufweist als das bekannte Eisen (II, III) -oxid. Für die Funktion des Feldsteuerungsbelages ist erwartungsgemäß der Mengenanteil des Siliciumcarbids sowie dessen Korngröße entscheidend.

Für die Polymermatrix des Feldsteuerungsbelags gemäß der Erfindung wird ein Rohstoff verwendet, der die folgenden Voraussetzungen erfüllt:

- Das Polymer muß in einem handelsüblichen, relativ tiefsiedenden Lösungsmittel bei Raumtemperatur vollständig gelöst werden.
- Das Polymer muß sehr große Füllstoffmengen aufnehmen können.
- Das hochgefüllte Polymer muß bei 90 - 100° C eine noch hinreichende Klebrigkeit entwickeln.
- Nach Abdunsten des Lösungsmittels aus der Beschichtung muß diese ausreichend flexibel sein und eine glatte Oberfläche ausbilden (keine Rißbildung infolge Sprödigkeit der trockenen Masse).

Gemäß der Erfindung wird nun als Polymer in Form eines Harzes, das die vorstehend genannten Anforderungen erfüllt, ein zähflüssiges, stark klebriges Ethylenpropylendienterpolymer (EPDM) oder Ethylenpropylencopolymer (EPM) gewählt. Dieses Polymer kann leicht in unpolaren Lösungsmitteln wie zum Beispiel Petroleumbenzin (Siedebereich 40 - 60° C) oder anderen Kohlenwasserstoff - Lösemitteln bzw. in chlorierten Kohlenwasserstoffen wie 1.1.1 - Trichlorethan gelöst werden. Die in Betracht kommenden EP(D)M - Harze besitzen mittlere Molekulargewichte ($\overline{M}v$) von 1000 bis 15000, vorzugsweise 6000 bis 8000. Als Dienkomponente kann Dicyclopentadien (DCP), Ethylidennorbornen (EN) oder 1.4 - Hexadien auftreten. Der Dienanteil im Harz liegt zwischen 0 und 13 Gewicht %, vorzugsweise bei 4,5 bis 9,5 Gewicht %, während das Ethylen-Propylen-Verhältnis im EP-Anteil zwischen 40/60 und 75/25 Gewicht %, vorzugsweise innerhalb des Bereichs 43/57 bis 54/46 Gewicht %, liegt. Es stellte sich heraus, daß zur Erfüllung der elektrischen Anforderungen ein Siliciumcarbid-Anteil zwischen 60 und 90 Gewicht %, vorzugsweise 80 Gewicht %, erforderlich ist. Als Korngrößen des Sic eignen sich besonders F 400 bis F 320.

Ein Feldsteuerungsbelag gemäß der Erfindung besitzt beispielsweise im EP(D)M/Sic Verhältnis folgende Zusammensetzung:

40 - 10 Gew. %     Trilene 66
60 - 90 Gew. %     Siliciumcarbid "Carbogran® dunkel" der Firma Lonza-Werke GmbH, Waldshut mit Mikrokorngröße F 360 oder F 320

Die Menge des Lösungsmittels, zum Beispiel 1.1.1-Trichlorethan, wird entsprechend der für die Beschichtung erwünschten Viskosität festgelegt (ca. 30000 mPa.s/ 23° C).

Als Polymermatrix kommen neben reinem EP(D)M - Flüssigharz auch Mischungen desselben mit anderen Harzen und/oder Kautschuken in Frage, die mit Trilene verträglich und in den genannten Lösungsmitteln löslich sind. Geeignete Polymere sind zum Beispiel andere EP(D)M - Typen mit abweichendem Molekulargewicht, Polyisobutylene und Butylkautschuk, Acrylatharze bzw. -kautschuk, Polybutene, ataktisches Polypropylen, Epichlorhydrinkautschuk.

Ebenso können zusätzliche Klebrigmacher wie zum Beispiel Kolophoniumester und dessen Derivate, Tallharze, Kohlenwasserstoffharze und Terpen-Phenol-Harze in die Polymermatrix eingemischt werden.

Zusätzlich zu den genannten Komponenten kann der Feldsteuerungsbelag ein oder mehrere Additive zur Verbesserung der thermooxidativen Stabilität (Antioxidantien) enthalten wie zum Beispiel Irganox 1010 oder Irganox 1076.

Der Feldsteuerungsbelag wird gemäß der Erfindung auf der Innenseite eines Schrumpfschlauches aufgebracht, wie es in zwei Figuren näher erläutert wird.

Figur 1      zeigt den Schrumpfschlauch vor der Schrumpfung,

Figur      2 zeigt den Schrumpfschlauch nach dem Schrumpfen im Einsatz als Endverschluß bei Mittelspannungsanlagen.

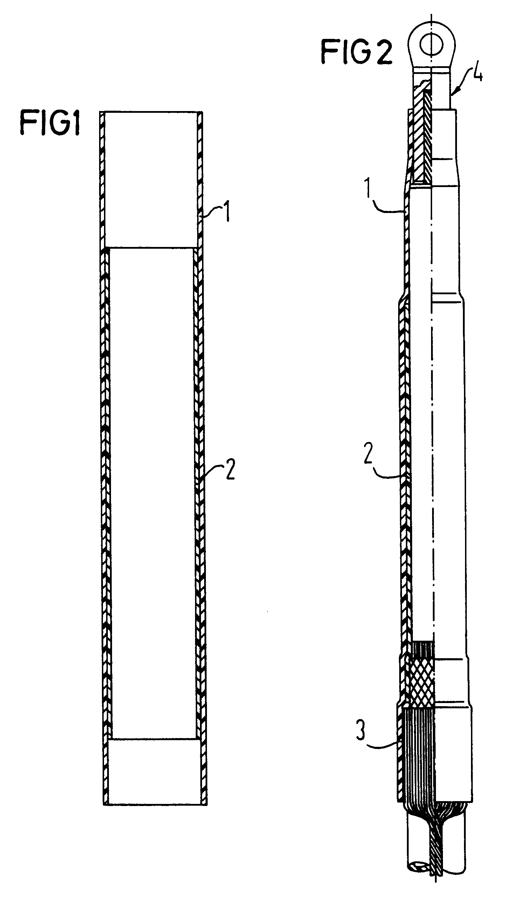

Die Figur 1 zeigt den Schrumpfschlauch 1 aus an sich bekanntem Schrumpfmaterial, auf dessen Innenseite zumindest im erforderlich wirksamen Bereich der Feldsteuerungsbelag 2 gemäß der Erfindung aufgebracht ist.

Die Figur 2 zeigt einen Endverschluß 4 für Mittelspannungsanlagen, wobei der Schrumpfschlauch 1 mit dem innen liegenden Feldsteuerungsbelag 2 auf das Kabelendstück aufgeschrumpft ist. Im Eingangsbereich ist auf der Innenseite des Schrumpfschlauches 1 ein kriechstromfester Kleber 3, zum Beispiel ein handelsüblicher Klebstoff auf der Basis von Polyisobutylen, der mit geeigneten Füllstoffen kriechstromfest ausgerüstet ist, aufgebracht, durch den eine Abdichtung erfolgt.

**Patentansprüche**

1.     Verfahren zur Herstellung eines Feldsteuerungsbelages (2) aus einem Polymermaterial und einem elektrisch leitfähigen Zusatz bei einem Endverschluß (4) für Mittelspannungen, **dadurch gekennzeichnet,** daß das Polymermaterial aus einem zähflüssigen, stark klebrigen Ethylenpropylendienterpolymer (EPDM) in einem leicht unpolaren Lösungsmittel gelöst wird, wobei das mittlere Molekulargewicht, $\overline{M}v$, des EPDM bis 15 000, vorzugsweise 6000 - 8000, beträgt, der Dienanteil zwischen 4,5 und 13 -Gewichts-% und das Ethylen-Propylen-Verhältnis im Ethylen-Propylen-Anteil zwischen 40/60 und 75/25 Gewichts-%, vorzugsweise zwischen 43/57 und 54/46 Gewichts-% liegt, daß als elektrisch leitfähiger Zusatz gekörntes Siliciumcarbid mit einer Korngröße von F 400 bis F 320 zugesetzt wird, wobei der Gewichtsanteil des Polymermaterials, ohne Lösungsmittel, 10 - 40 % und der des elektrisch leitenden Zusatzes entsprechend 60 - 90 % beträgt, daß diese Lösung zumindest bereichsweise auf der Innenfläche als Beschichtung eines vorzugsweise kriechstromfesten Schrumpfschlauches (1) aufgetragen wird und daß dann das Lösungsmittel aus der Beschichtung abdunstet.

2.     Verfahren nach Anspruch 1,
    **dadurch gekennzeichnet,**
    daß als Dienkomponente Dicyclopentadien (DVP) verwendet wird.

3.     Verfahren nach Anspruch 1,
    **dadurch gekennzeichnet,**
    daß als Dienkomponente Ethylidennorbornen (EN) verwendet wird.

4.     Verfahren nach Anspruch 1,
    **dadurch gekennzeichnet,**
    daß als Dienkomponente 1.4 - Hexadien verwendet wird.

5.     Verfahren nach einem der vorhergehenden Ansprüche,
    **dadurch gekennzeichnet,**
    daß als Lösungsmittel Petroleumbenzin mit einem Siedebereich 40° - 60° C verwendet wird.

6.     Verfahren nach einem der Ansprüche 1 bis 4,
    **dadurch gekennzeichnet,**
    daß als Lösungsmittel ein chlorierter Kohlenwasserstoff, vorzugsweise 1.1.1-Trichlorethan verwendet wird.

7.     Verfahren nach einem der vorhergehenden Ansprüche,
    **dadurch gekennzeichnet,**

EP 0 436 821 B1

daß die hergestellte Lösung auf eine Viskosität im Bereich von vorzugsweise 30 000 m Pa.s/23° gebracht wird.

8.  Verfahren nach einem der vorhergehenden Ansprüche,
    **dadurch gekennzeichnet,**
    daß als Polymermaterial ein gesättigtes, niedermolekulares Ethylen-alpha-Olefinpolymerisat mit und ohne 5-Ethyliden-2-norbornen/Dicyclopentadien verwendet wird.

9.  Verfahren nach einem der vorhergehenden Ansprüche,
    **dadurch gekennzeichnet,**
    daß die Lösung aus den folgenden Bestandteilen zusammengemischt wird:

    | | |
    |---|---|
    | 21,1 Gewichts-% | gesättigtes, niedermolekulares Ethylen-alpha-Olefinpolymerisat mit und ohne 5-Ethyliden-2- norbornen/ Dicyclopentadien |
    | 49,2 Gewichts-% | Siliciumcarbid |
    | 29,7 Gewichts-% | Lösungsmittel, vorzugsweise 1.1.1.-Trichlorethan. |

10. Verfahren nach einem der vorhergehenden Ansprüche,
    **dadurch gekennzeichnet,**
    daß die Innenfläche der nicht beschichteten Bereiche des Schrumpfschlauches (1) mit einem Kleber, vorzugsweise einem kriechstromfesten Schmelzkleber, beschichtet wird.

## Claims

1.  Process for producing a field-control coating (2) from a polymer material and an electrically conductive additive in a termination (4) for medium voltages, characterized in that the polymer material composed of a viscous, strongly adhesive ethylene/propylene/diene terpolymer (EPDM) is dissolved in a slightly nonpolar solvent, the mean molecular weight, $\overline{M}v$, of the EPDM being up to 15,000, preferably 6,000 - 8,000, the diene component being between 4.5 and 13% percent by weight and the ethylene/propylene ratio in the ethylene/propylene component being between 40/60 and 75/25% by weight, preferably between 43/57 and 54/46% by weight, in that granulated silicon carbide having a particle size of F 400 to F 320 is added as electrically conducting additive, the proportion by weight of the polymer material, without solvent, being 10 - 40% and that of the electrically conducting additive correspondingly 60 - 90%, in that this solution is applied at least to some areas of the inside surface as a coating of a preferably track-resistant shrink-on sleeve (1) and in that the solvent is then evaporated out of the coating.

2.  Process according to Claim 1, characterized in that dicyclopentadiene (DVP) is used as diene component.

3.  Process according to Claim 1, characterized in that ethylidenenorbornene (EN) is used as diene component.

4.  Process according to Claim 1, characterized in that 1,4-hexadiene is used as diene component.

5.  Process according to one of the preceding claims, characterized in that petroleum benzine having a boiling range of 40° - 60°C is used as solvent.

6.  Process according to one of Claims 1 to 4, characterized in that a chlorinated hydrocarbon, preferably 1,1,1-trichloroethane is used as solvent.

7.  Process according to one of the preceding claims, characterized in that the solution produced is brought to a viscosity in the region of, preferably, 30,000 mPa.s/23°.

8.  Process according to one of the preceding claims, characterized in that a saturated, low-molecular-weight ethylene/alpha-olefin polymer with and without 5-ethylidene-2-norbornene/dicyclopentadiene is used as polymer material.

9.  Process according to one of the preceding claims, characterized in that the solution is prepared by mixing the following components:

    21.1% by weight of saturated, low-molecular-weight ethylene/alpha-olefin polymer with and without

5

5-ethylidene-2-norbornene/dicyclopentadiene
49.2% by weight of silicon carbide,
29.7% by weight of solvent, preferably 1,1,1-trichloroethane.

**10.** Process according to one of the preceding claims, characterized in that the inside surface of the uncoated areas of the shrink-on sleeve (1) is coated with an adhesive, preferably a track-resistant hot-melt adhesive.

## Revendications

**1.** Procédé pour fabriquer une couche (2) de commande de champ, à partir d'un matériau polymérie et d'un additif électriquement conducteur, dans un élément d'extrémité (4) pour moyennes tensions, caractérisé par le fait qu'on dissout le matériau polymérie formé d'un terpolymère d'éthylènepropylènediène (EPDM) visqueux et très collant, dans un solvant faiblement unipolaire, le poids moléculaire moyen $\overline{M}v$ du polymère EPDM atteignant jusqu'à 15 000 et de préférence étant compris entre 6000 et 8000, le pourcentage de diène étant comprise entre 4,5 et 13 % en poids et le rapport éthylène-propylène dans la composante éthylène-propylène étant compris entre 40/60 et 75/25 % en poids et de préférence entre 43/57 et 54/46 % en poids, qu'on ajoute, en tant qu'additif électriquement conducteur, du carbure de silicium sous la forme de granulés à une granulométrie comprise entre F 400 et F 320, le pourcentage en poids du matériau polymérie, sans solvant, étant compris entre 10 et 40 % et celui de l'additif électriquement conducteur étant compris de façon correspondante entre 60 et 90 %, qu'on dépose cette solution au moins par endroits sur la surface intérieure en tant que revêtement d'un tuyau rétractable (1) résistant de préférence aux courants de fuite, et qu'on évapore ensuite le solvant à partir du revêtement.

**2.** Procédé suivant la revendication 1, caractérisé par le fait qu'on utilise en tant que constituant diène du dicyclopentadiène (DVP).

**3.** Procédé suivant la revendication 1, caractérisé par le fait qu'on utilise comme constituant diène, du norbornen d'éthylidène (EN).

**4.** Procédé suivant la revendication 1, caractérisé par le fait qu'on utilise comme constituant diène, du 1,4-hexadiène.

**5.** Procédé suivant l'une des revendications précédentes, caractérisé par le fait qu'on utilise comme solvant du naphta possédant une plage d'ébullition de 40°-60°.

**6.** Procédé suivant l'une des revendications 1 à 4, caractérisé par le fait qu'on utilise comme solvant un hydrocarbure chloré, de préférence du 1.1.1-trichloroéthane.

**7.** Procédé suivant l'une des revendications précédentes, caractérisé par le fait qu'on règle la solution préparée à une viscosité voisine de préférence de 30 000 mPa.s/23°.

**8.** Procédé suivant l'une des revendications précédentes, caractérisé par le fait qu'on utilise comme matériau polymérique un polymère d'éthylène-alpha-oléfine saturé à bas poids moléculaire avec et sans 5-éthylidène-2-norbornen/dicyclopentadiène.

**9.** Procédé suivant l'une des revendications précédentes, caractérisé par le fait qu'on forme la solution en mélangeant les constituants suivants :

21,1 % en poids      d'un polymère d'éthylène-alpha-oléfine saturé à bas poids moléculaire avec et sans 5-éthylidène-2-norbornen/dicyclopentadiène,
49,2 % en poids      de carbure de silicium,
29,7 % en poids      de solvant, de préférence du 1.1.1.- trichloroéthane.

**10.** Procédé suivant l'une des revendications précédentes, caractérisé par le fait qu'on recouvre la surface intérieure des zones non recouvertes du tuyau rétractable (1), avec une colle, de préférence une colle fusible résistant aux courants de fuite.

FIG 2

FIG1

1

2

3

4